(19) Europäisches Patentamt
European Patent Office
Office européen des brevets

(11) EP 2 041 885 B1

(12) **EUROPEAN PATENT SPECIFICATION**

(45) Date of publication and mention
of the grant of the patent:
**18.10.2017 Bulletin 2017/42**

(21) Application number: **07812410.4**

(22) Date of filing: **28.06.2007**

(51) Int Cl.:
*H04B 7/04* (2017.01)      *H04B 7/26* (2006.01)
*H04B 7/02* (2017.01)      *H04B 7/06* (2006.01)
*H04B 17/00* (2015.01)

(86) International application number:
**PCT/US2007/072324**

(87) International publication number:
**WO 2008/003022 (03.01.2008 Gazette 2008/01)**

(54) **CALIBRATION SYSTEMS AND TECHNIQUES FOR DISTRIBUTED BEAMFORMING**

KALIBRIERSYSTEME UND VERFAHREN FÜR VERTEILTE STRAHLFORMUNG

SYSTÈMES D'ÉTALONNAGE ET TECHNIQUES POUR UNE FORMATION DE FAISCEAU DISTRIBUÉE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **29.06.2006 US 477244**

(43) Date of publication of application:
**01.04.2009 Bulletin 2009/14**

(73) Proprietor: **Intel Corporation**
**Santa Clara, CA 95054 (US)**

(72) Inventor: **MITRAN, Patrick**
**San Jose, California 95129 (US)**

(74) Representative: **HGF Limited**
**Fountain Precinct**
**Balm Green**
**Sheffield S1 2JA (GB)**

(56) References cited:
WO-A1-2004/064340      WO-A1-2005/101772
US-A1- 2004 087 324      US-A1- 2004 136 349
US-B2- 7 027 523

- **RAGHURAMAN MUDUMBAI ET AL: "Distributed Beamforming using 1 Bit Feedback: from Concept to Realization", PROCEEDINGS OF THE ANNUAL ALLERTON CONFERENCE ONCOMMUNICATION, CONTROL AND COMPUTING, XX, XX , no. 44TH 1 January 2006 (2006-01-01), pages 1020-1027, XP002607570, Retrieved from the Internet: URL:http://www.ece.ucsb.edu/~raghu/researc h/allerton06.pdf [retrieved on 2010-10-29]**
- **MITRAN P ET AL: "Collaborative Beamforming for Distributed Wireless Ad Hoc Sensor Networks", IEEE TRANSACTIONS ON SIGNAL PROCESSING, IEEE SERVICE CENTER, NEW YORK, NY, US, vol. 53, no. 11, 1 November 2005 (2005-11-01), pages 4110-4124, XP011141125, ISSN: 1053-587X, DOI: 10.1109/TSP.2005.857028**

**Description**

**BACKGROUND**

Beamforming is a signal processing technique used for an antenna array that involves transmitting a signal from each antenna at a different time delay or phase shift and amplifying the signal from each antenna by a different weight so that the signals when combined produce the effect of a single strong signal. The beamforming phase shifts and weights may be applied in a fixed or in an adaptive manner.

In a Multiple Input, Multiple Output (MIMO) communications system, a transmitter and a receiver each include an antenna array having multiple antennas for sending and receiving one or multiple spatial streams over a wireless communication link. To increase the antenna gain in the direction of an intended receiver, the transmitter may employ antenna beamforming when transmitting one or multiple spatial streams. Due to cost or design constraints, many wireless devices may not include more than one antenna and are unable to take advantage of MIMO beamforming techniques.

RAGHURAMAN MUDUMBAI ET AL: "Distributed Beamforming using 1 Bit Feedback: from Concept to Realization", PROCEEDINGS OF THE ANNUAL ALLERTON CONFERENCE ON COMMUNICATION, CONTROL AND COMPUTING, XX, XX no. 44TH 1 January 2006 (2006-01-01), pages 1020-1027, XP002607570.

WO 2005/101772 relates to a calibration of transmit and receive claims in a MIMO communication system.

MITRAN P ET AL: "Collaborative Beamforming for Distributed Wireless Ad Hoc Sensor Networks", IEEE TRANSACTIONS ON SIGNAL PROCESSING, IEEE SERVICE CENTER, NEW YORK, NY, US, vol. 53, no. 11, 1 November 2005 (2005-11-01), pages 4110-4124, XP011141125, ISSN: 1053-587X, 001: 10.1109/TSP.2005.857028.

According to a first aspect of the invention, there is provided an apparatus as claimed in claim 1.

According to a second aspect of the invention, there is provided a system as claimed in claim 6.

According to a third aspect of the invention there is provided a method as claimed in claim 8.

According to a fourth aspect of the invention there is provided machine readable storage as claimed in claim 13.

Further embodiments of the invention are included in the dependent claims.

**BRIEF DESCRIPTION OF THE DRAWINGS**

FIG. 1 illustrates one embodiment of a communications system.
FIG. 2 illustrates one embodiment of a logic flow.
FIG. 3 illustrates one embodiment of an article of manufacture.

**DETAILED DESCRIPTION**

Various embodiments are directed to a collaborative or distributed wireless network in which multiple independent wireless devices are arranged to perform distributed beamforming by cooperatively communicating with a particular recipient device. The multiple independent wireless devices may coordinate with each other to act as a smart or virtual antenna array, and the transmit and receive chains of the cooperating devices may be calibrated to enable coherent reception at the recipient device.

In various embodiments, calibration may be performed based on effective channel knowledge acquired by sounding the effective channels between the cooperating devices and the recipient device. By sounding the effective channels, the cooperating transmitting devices may learn or acquire effective channel knowledge and then pre-multiply transmissions to the recipient device by a scalar or weighting factor that is a function of the effective channel knowledge.

In various implementations, one or more of the cooperating devices may receive a packet from a source and retransmit the packet simultaneously to a recipient wireless device not within range of the source. By calibrating the transmit and receive chains of the cooperating wireless devices, significant gains may be achieved when communicating with the recipient device. In particular, the recipient device may realize beamforming gain and an improved signal-to-noise ratio (SNR). In addition, the range of the source may be increased by phase adjustments based on channel knowledge.

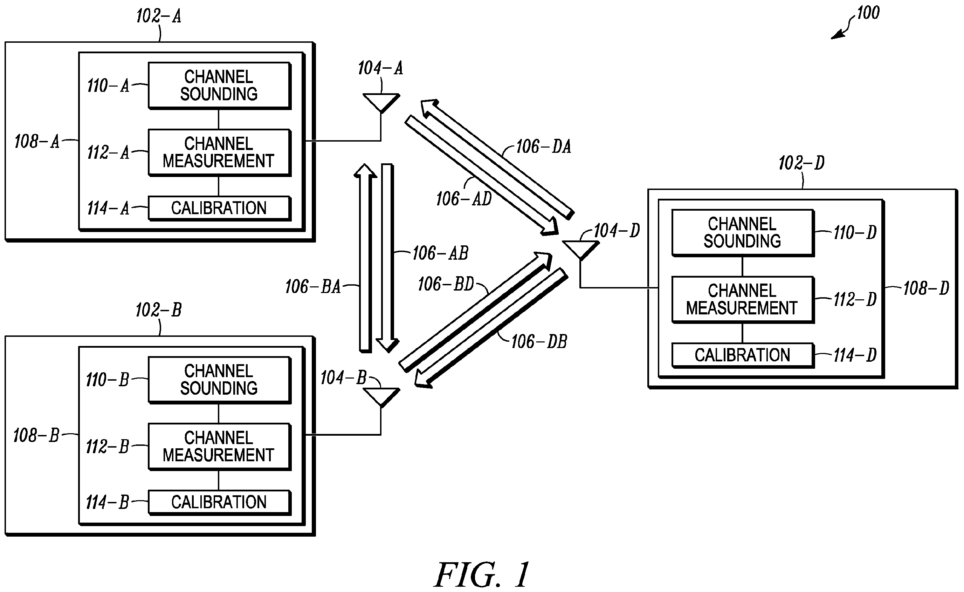

**FIG. 1** illustrates a block diagram of one embodiment of a communications system 100. In various embodiments, the communications system 100 may comprise multiple nodes. A node generally may comprise any physical or logical entity for communicating information in the communications system 100 and may be implemented as hardware, software, or any combination thereof, as desired for a given set of design parameters or performance constraints. Although FIG. 1 may show a limited number of nodes by way of example, it can be appreciated that more or less nodes may be employed for a given implementation.

The nodes of the communications system 100 may be arranged to communicate one or more types of information, such as media information and control information. Media information generally may refer to any data representing content meant for a user, such as image information, video information, graphical information, audio information, voice information, textual information, numerical information, alphanumeric symbols, character symbols, and so forth. Control information generally may refer to any data representing commands, instructions or control words meant for an automated system. For example, control information may be used to route media information through a system, or instruct a node to process the media information in a certain manner. The media and control information may be communicated from and to a number of different devices or networks.

In various implementations, the media information and control information may be segmented into a series of packets. Each packet may comprise, for example, a discrete data set having a fixed or varying size represented in terms of bits or bytes. It can be appreciated that the described embodiments are applicable to any type of communication content or format, such as packets, frames, fragments, cells, windows, units, and so forth.

In various embodiments, the communications system 100 may be arranged to communicate information over one or more types of wireless communication links. Examples of a wireless communication link may include, without limitation, a radio channel, infrared channel, radio frequency (RF) channel, Wireless Fidelity (WiFi) channel, wideband channel, ultra-wideband (UWB) channel, multi-carrier channel (e.g., MIMO channel), a portion of the RF spectrum, and/or one or more licensed or license-free frequency bands. The communications system 100 also may be arranged to communicate information over one or more types of wired communication links. Examples of a wired communication link, may include, without limitation, a wire, cable, bus, Universal Serial Bus (USB), printed circuit board (PCB), Ethernet connection, peer-to-peer (P2P) connection, backplane, switch fabric, semiconductor material, twisted-pair wire, co-axial cable, fiber optic connection, and so forth. Although the communications system 100 may be illustrated and described as using particular communication links by way of example, it may be appreciated that the principles and techniques discussed herein may be applicable to various types of communication links in accordance with the described embodiments.

The communications system 100 may communicate, manage, and/or process information in accordance with one or more protocols. A protocol may comprise a set of predefined rules or instructions for managing communication among nodes. In various embodiments, for example, the communications system 100 may employ one or more protocols such as medium access control (MAC) protocol, Physical Layer Convergence Protocol (PLCP), Simple Network Management Protocol (SNMP), Asynchronous Transfer Mode (ATM) protocol, Frame Relay protocol, Systems Network Architecture (SNA) protocol, Transport Control Protocol (TCP), Internet Protocol (IP), TCP/IP, X.25, Hypertext Transfer Protocol (HTTP), User Datagram Protocol (UDP), and so forth.

The communications system 100 may employ one or more modulation techniques including, for example, frequency hopping spread spectrum (FHSS) modulation, direct sequence spread spectrum (DSSS) modulation, orthogonal frequency division multiplexing (OFDM) modulation, Binary Phase Shift Keying (BPSK) modulation, Complementary Code Keying (CCK) modulation, Quadrature Phase Shift Keying (QPSK) modulation, Offset QPSK (OQPSK) modulation, Differential QPSK (DQPSK), Quadrature Amplitude Modulation (QAM), N-state QAM (N-QAM), Differential QAM (DQAM), Frequency Shift Keying (FSK) modulation, Minimum Shift Keying (MSK) modulation, Gaussian MSK (GMSK) modulation, and so forth.

The communications system 100 may communicate information in accordance with one or more standards as promulgated by a standards organization, such as the International Telecommunications Union (ITU), the International Organization for Standardization (ISO), the International Electrotechnical Commission (IEC), the Institute of Electrical and Electronics Engineers (IEEE), an IEEE Task Group (TG), the Internet Engineering Task Force (IETF), and so forth.

In various embodiments, for example, the communications system 100 may communicate information according to one or more IEEE 802.xx standards and associated protocols such as IEEE 802.11 standards for Wireless Local Area Networks (WLANs) including the IEEE 802.11 standard (1999 Edition, Information Technology Telecommunications and Information Exchange Between Systems - Local and Metropolitan Area Networks - Specific Requirements, Part 11: WLAN Medium Access Control (MAC) and Physical (PHY) Layer Specifications), its progeny and extensions thereto (e.g., 802.11a/b/g/n, and variants); and IEEE 802.16 standards for WLANs and Wireless Metropolitan Area Networks (WMANs) including the IEEE 802.16 standard (IEEE Std 802.16-2001 for Local and Metropolitan area networks Part 16: Air Interface for Fixed Broadband Wireless Access Systems), its progeny and extensions thereto (e.g., 802.16-2004, 802.16.2-2004, 802.16d, 802.16e, 802.16f, and variants).

The communications system 100 also may support communication in accordance with next generation IEEE 802.xx standards such as IEEE 802.11 standards for WLANs including the 802.1 In extension for World-Wide Spectrum Efficiency (WWiSE) and the IEEE 802.11s extension for Extended Service Set (ESS) Mesh networking, IEEE 802.15 standards for Wireless Personal Area Networks (WPANs), IEEE 802.16 standards for WLANs and WMANs, IEEE 802.20 standards for Mobile Broadband Wireless Access (MBWA), and/or IEEE 802.21 standards for handover and interoperability between 802 and non-802 networks. The embodiments are not limited in this context.

In various embodiments, the communications system 100 may comprise or form part of a wireless network. In one embodiment, for example, the communications system 100 may comprise a WLAN such as a basic service set (BSS), an ad-hoc independent (IBSS), and/or extended service set (ESS) wireless network. In such an embodiment, the wireless network may communicate information in accordance with various WLAN protocols such as IEEE 802.11 a/b/g/n protocols.

Although some embodiments may be described with the communications system 100 implemented as a WLAN for purposes of illustration, and not limitation, it can be appreciated that the embodiments are not limited in this context. For example, the communications system 100 may comprise or be implemented as various types of networks and associated protocols such as a WMAN, WPAN, Wireless Wide Area Network (WWAN), Worldwide Interoperability for Microwave Access (WiMAX) network, Broadband Wireless Access (BWA) network, Code Division Multiple Access (CDMA) network, Wide-band CDMA (WCDMA) network, CDMA-2000 network, CDMA/1xRTT network, Time Division Synchronous CDMA (TD-SCDMA) network, Time Division Multiple Access (TDMA) network, Extended-TDMA (E-TDMA) network, Spatial Division Multiple Access (SDMA) network, Global System for Mobile Communications (GSM) network, GSM with General Packet Radio Service (GPRS) systems (GSM/GPRS) network, Enhanced Data Rates for Global Evolution (EDGE) network, Evolution Data Only or Evolution Data Optimized (EV-DO) network, Evolution For Data and Voice (EV-DV) network, High Speed Downlink Packet Access (HSDPA) network, North American Digital Cellular (NADC) network, Narrowband Advanced Mobile Phone Service (NAMPS) network, Universal Mobile Telephone System (UMTS) network, Orthogonal Frequency Division Multiplexing (OFDM) network, Orthogonal Frequency Division Multiple Access (OFDMA) network, third generation (3G) network, fourth generation (4G) network, wireless mesh network, sensor network, cellular network, radio network, television network, satellite network, Internet network, World Wide Web (WWW) network, and/or any other communications network configured to operate in accordance with the described embodiments.

As shown in FIG. 1, the communications system 100 may comprise a plurality of nodes including, for example, nodes 102-A, 102-B, and 102-D. In various embodiments, the plurality of nodes 102-A, 102-B, and 102-D may be arranged to communicate with each other. FIG. 1 depicts nodes 102-A, 102-B, and 102-D for purposes of illustration, and not limitation. It can be appreciated that the communications system 100 may employ any number of nodes in accordance with the described embodiments.

In various embodiments, one or more of the nodes (e.g., node 102-A) may receive content from an external source to be transmitted to another node (e.g., node 102-D). In such embodiments, the node that receives the content may be coupled to the external source through various types of communication media capable of carrying information signals such as a wired communication link, wireless communication link, or a combination of both, as desired for a given implementation. In some cases, the content may traverse one or more networks or devices from the external source to the nodes.

The external source generally may comprise any source capable of delivering static or dynamic content. In one embodiment, for example, the external source may comprise a server arranged to deliver IP-based content. In some implementations, the external source may form part of a media distribution system (DS) or broadcast system such as an over-the-air (OTA) broadcast system, a radio broadcast system, a television broadcast system, a satellite broadcast system, and so forth. In some implementations, the external source may be arranged to deliver media content in various formats for use by a device such as a Digital Versatile Disk (DVD) device, a Video Home System (VHS) device, a digital VHS device, a digital camera, video camera, a portable media player, a gaming device, and so forth.

It can be appreciated that although some implementations may involve receiving content from an external source, the embodiments are not limited in this context. For example, in some embodiments, one or more of the nodes (e.g., node 102-A and/or node 102-B) may generate content that is to be transmitted to another node (e.g., node 102-D).

The content to be transmitted may comprise, for example, various types of information such as image information, audio information, video information, audio/visual (A/V) information, and/or other data. In various embodiments, the information may be associated with one or more images, image files, image groups, pictures, digital photographs, music file, sound files, voice information, videos, video clips, video files, video sequences, video feeds, video streams, movies, broadcast programming, television signals, web pages, user interfaces, graphics, textual information (e.g., encryption keys, serial numbers, e-mail messages, text messages, instant messages, contact lists, telephone numbers, task lists, calendar entries, hyperlinks), numerical information, alphanumeric information, character symbols, and so forth. The information also may include command information, control information, routing information, processing information, system file information, system library information, software (e.g., operating system software, file system software, application software, game software), firmware, an application programming interface (API), program, applet, subroutine, instruction set, instruction, computing code, logic, words, values, symbols, and so forth.

In various embodiments, the nodes 102-A, 102-B, and 102-D may be implemented as wireless devices. Examples of wireless devices may include, without limitation, a wireless card, a wireless access point (AP), a wireless client device, a fixed or wireless station (STA), a sensor, a mote, a laptop computer, ultra-laptop computer, portable computer, personal computer (PC), notebook PC, handheld computer, personal digital assistant (PDA), cellular telephone, combination cellular telephone/PDA, smart phone, pager, messaging device, media player, digital music player, set-top box (STB), appliance, subscriber station (SS), base station (BS) workstation, user terminal, mobile unit, router, bridge, gateway, and so forth. In such embodiments, the nodes 102-A, 102-B, and 102-D each may comprise one more wireless interfaces and/or components for wireless communication such as one or more transmitters, receivers, transceivers, chipsets, amplifiers, filters, control logic, network interface cards (NICs), antennas, and so forth.

As shown in the embodiment of FIG. 1, for example, the nodes 102-A, 102-B, and 102-D may comprise corresponding antennas 104-A, 104-B, and 104-D for transmitting and/or receiving electrical signals. Each of the antennas 104-A, 104-B, and 104-D may comprise a single antenna for the corresponding nodes 102-A, 102-B, and 102-D. It can be appreciated that the location of the antennas 104-A, 104-B, and 104-D for the corresponding nodes 102-A, 102-B, and 102-D may vary in accordance with performance and design constraints.

Each of the antennas 104-A, 104-B, and 104-D may comprise any type of suitable internal or external antenna. Examples of an antenna may include, without limitation, an omni-directional antenna, a monopole antenna, a dipole antenna, an end fed antenna, a circularly polarized antenna, a microstrip antenna, a diversity antenna, a whip antenna, extendable antenna, antenna stub, and so forth. In various embodiments, the antennas 104-A, 104-B, and 104-D may be arranged to operate at one or more frequency bands.

In various implementations, the antennas 104-A, 104-B, and 104-D may be arranged to transmit and receive signals over wireless channels. As shown in the embodiment of FIG. 1, for example, the channel 106-AB may be used to communicate signals from the antenna 104-A of node 102-A to the antenna 104-B of node 102-B. The channel 106-BA may be used to communicate signals from the antenna 104-B of node 102-B to the antenna 104-A of node 102-A. The channel 106-AD may be used to communicate signals from the antenna 104-A of node 102-A to the antenna 104-D of node 102-D. The channel 106-DA may be used to communicate signals from the antenna 104-D of node 102-D to the antenna 104-A of node 102-A. The channel 106-BD may be used to communicate signals from the antenna 104-B of node 102-B to the antenna 104-D of node 102-D. The channel 106-DB may be used to communicate signals from the antenna 104-D of node 102-D to the antenna 104-B of node 102-B.

Each wireless channel may comprise, for example, a path or connection between particular antennas and/or nodes implemented by dedicated resources or bandwidth of a physical wireless link. In various embodiments, some channels between common nodes may comprise reciprocal channels. For example, the channels 106-AB and 106-BA may comprise reciprocal channels such that the channel gains between antenna 104-B of node 102-B to the antenna 104-A of node 102-A and antenna 104-A of node 102-A to the antenna 104-B of node 102-B are assumed identical.

In various embodiments, the nodes 102-A, 102-B, and 102-D may be implemented as a collaborative or distributed wireless network (e.g., WLAN) in which multiple independent wireless devices may coordinate with each other to act as a smart or virtual antenna array and cooperatively communicate with another wireless device. In various implementations, one or more of the cooperating devices may receive a packet from a source and retransmit the packet simultaneously to a recipient wireless device not within range of the source.

The transmit and receive chains of the cooperating devices may be calibrated to enable coherent reception at the recipient device. Calibration may be performed based on effective channel knowledge acquired by sounding the effective channels between the cooperating devices and the recipient device. The effective channel may comprise, for example, the total result of the gain of the transmitter chain combined with that of the gain between the antennas of two nodes combined with the gain of the receive chain. By calibrating the transmit and receive chains of the cooperating wireless devices, significant gains may be achieved when communicating with the recipient device. In particular, the recipient device may realize beamforming gain and an improved SNR. In addition, the range of the source may be increased by phase adjustments based on channel knowledge.

In various embodiments, to perform distributed beamforming and cooperatively communicate with a particular recipient device, the cooperating transmitting devices may acquire effective channel knowledge of the channels between each other and the recipient device. In such embodiments, the transmitting devices may be arranged to exchange messages such as sounding frames to sound the effective channels between each other and to sound the effective channels between the transmitting devices and the recipient device. By sounding the effective channels, the cooperating transmitting devices may learn or acquire effective channel knowledge and then pre-multiply transmissions to the recipient device by a scalar or weighting factor that is a function of one or more acquired effective channels. In such embodiments, the recipient device may realize beamforming gain and improved SNR.

For purposes of illustration, and not limitation, one exemplary embodiment will be described with reference to FIG. 1. In this embodiment, the nodes 102-A, 102-B, and 102-D may support distributed beamforming such that the nodes 102-A and 102-B may act as a virtual antenna array (e.g., antennas 104-A and 104-B) and coordinate with each other to cooperatively communicate with node 102-D. In some cases, the nodes 102-A and 102-B may coordinate with each other during association and agree to support distributed beamforming when communicating with node 102-D.

To perform distributed beamforming and cooperatively communicate with node 102-D, the nodes 102-A and 102-B may be arranged to acquire effective channel knowledge of the channels between each other and node 102-D. In this embodiment, by sounding the effective channels, the nodes 102-A and 102-B may learn or acquire effective channel knowledge of channels 106-AB, 106-BA, 106-DA, and 106-DB.

The nodes 102-A and 102-B may be arranged to sound the effective channels between each other and the receiver node 102-D by transmitting and/or receiving sounding frames. The sounding frames may include independent information to be transmitted by each of the antennas 104-A, 104-B, and 104-D. In various embodiments, the sounding frames may comprise, for example, training sequences (e.g., long training sequences) implemented by a sounding MAC frame or other sounding PHY protocol data unit (PPDU). Although some embodiments may be described as employing frames for purposes of illustration, and not limitation, it can be appreciated that the embodiments are not limited in this context. For example, the described embodiments are applicable to various types of communication content or formats, such as frames, packets, fragments, segments, cells, units, and so forth.

The nodes 102-A and 102-B may be arranged to obtain effective channel knowledge of the channels between each other and the receiver node 102-D based on the sounding frames. In this embodiment, the node 102-B is able to acquire effective channel knowledge of channel 106-AB based on a sounding frame sent from the antenna 104-A of node 102-A to the antenna 104-B of node 102-B. The node 102-A is able to acquire effective channel knowledge of the channel 106-BA based on a sounding frame sent from the antenna 104-B of node 102-B to the antenna 104-A of node 102-A.

The node 102-A is able to acquire effective channel knowledge of the channel 106-DA based on a sounding frame sent from the antenna 104-D of node 102-D to the antenna 104-A of node 102-A. The node 102-B is able to acquire effective channel knowledge of the effective channel 106-DB based on a sounding frame sent from the antenna 104-D of node 102-D to the antenna 104-B of node 102-B. In this example, the node 102-D may transmit a sounding frame simultaneously to nodes 102-A and 102-B. As such, effective channel knowledge for channels 106-AB, 106-BA, 106-DA, and 106-DB may be obtained with a total overhead of three sounding frames.

In various implementations, effective channel knowledge may be based on the assumption of channel reciprocity between some nodes. According to the principle of channel reciprocity, the characteristics of the channel in the direction from a transmitting node to the receiving node may be the same as the characteristics of the channel in the direction from the receiving node to the transmitting node. For example, assuming that the channel 106-AB is reciprocal with the channel 106-BA, the nodes 102-A and 102-B may exchange sounding frames which are used to acquire effective channel knowledge for the channels 106-AB and 106-BA. In this example, the channel 106-AB from the antenna 104-A of node 102-A to the antenna 104-B of node 102-B may be denoted as $H_{AB}$. The channel 106-BA from the antenna 104-B of node 102-B to the antenna 104-A of node 102-A may be denoted as $H_{BA}$. Assuming that the wireless over-the-air channels 106-AB and 106-BA are reciprocal and assuming perfect time and frequency synchronization between nodes 102-A and 102-B, it follows that $H_{AB} = H_{BA}$.

Due to the fact that each of the antennas typically has a different receive and transmit chain, the effective channel knowledge obtained for a particular channel between nodes may comprise aggregate knowledge that models the transmitting chain and receiving chain for each effective channel. For example, the effective channel knowledge obtained for the channel 106-AB ($H_{AB}$) between nodes 102-A and 102-B may be viewed at the signal processing layer as $\beta_B H_{AB} \alpha_A$, where $\alpha_A$ is a complex number that models the effects of the transmit chain of node 102-A, and $\beta_B$ is a complex number that models the effects of the receive chain of node 102-B. The effective channel knowledge obtained for the channel 106-BA ($H_{BA}$) between nodes 102-B and 102-A may be viewed at the signal processing layer as $\beta_A H_{BA} \alpha_B$, where $\alpha_B$ is a complex number that models the effects of the transmit chain of node 102-B, and $\beta_A$ is a complex number that models the effects of the receive chain of node 102-A. In general, $\beta_B H_{AB} \alpha_A \neq \beta_A H_{BA} \alpha_B$.

The effective channel knowledge obtained for the channel 106-DA ($H_{DA}$) between nodes 102-D and 102-A may be viewed as $\beta_A H_{DA} \alpha_D$ at the signal processing layer, where $\alpha_D$ is a complex number that models the effects of the transmit chain of node 102-D, and $\beta_A$ is a complex number that models the effects of the receive chain of node 102-A. The effective channel knowledge obtained for the channel 106-DB ($H_{DB}$) between nodes 102-D and 102-B may be viewed at the signal processing layer as $\beta_B H_{DB} \alpha_D$, where $\alpha_D$ is a complex number that models the effects of the transmit chain of node 102-D, and $\beta_B$ is a complex number that models the effects of the receive chain of node 102-B.

After the effective channel knowledge has been acquired, the receive and transmit chains of the nodes 102-A and 102-B may be calibrated based on the effective channel knowledge to enable coherent reception at the node 102-D. In this embodiment, the nodes 102-A and 102-B may be calibrated by pre-multiplying transmissions to node 102-D by a scalar or weighting factor that is a function of the acquired effective channel knowledge. In various implementations, a scalar or weighting factor may be applied to one or more symbols transmitted to the node 102-D.

In particular, if the nodes 102-A and 102-B wish to cooperatively send symbol (*s*) to the node 102-D, the node 102-A may pre-multiply its transmission by the complex scalar: $\beta_A H_{BA} \alpha_B (\beta_A H_{DA} \alpha_D)$ * / $|\beta_A H_{BA} \alpha_B \beta_A H_{DA} \alpha_D|$, where the asterix denotes complex conjugation. Likewise, node 102-B may pre-multiply its transmission by the complex scalar: $\beta_B H_{AB} \alpha_A (\beta_B H_{DB} \alpha_D)$ * / $|\beta_B H_{AB} \alpha_A \beta_B H_{DB} \alpha_D|$.

It follows that the transmission to the node 102-D from the node 102-A is: $\beta_A H_{BA} \alpha_B (\beta_A H_{DA} \alpha_D)$ *s / $|\beta_A H_{BA} \alpha_B \beta_A H_{DA} \alpha_D|$, and the transmission to node 102-D from the node 102-B is: $\beta_B H_{BA} \alpha_A (\beta_B H_{DB} \alpha_D)$ *s / $|\beta_B H_{AB} \alpha_A \beta_B H_{DB} \alpha_D|$.

The received signal at the node 102-D is then found to be:

$$\left( \frac{\alpha_A \alpha_B \alpha_D^* \beta_D H_{AB} |H_{DA}|}{|\alpha_B \alpha_D^* H_{AB}|} + \frac{\alpha_A \alpha_B \alpha_D^* \beta_D H_{AB} |H_{DB}|}{|\alpha_A \alpha_D^* H_{AB}|} \right) s,$$

where by channel reciprocity, both terms in the parentheses have the same phase and therefore add coherently to provide a beamforming gain at node 102-D.

In some embodiments, if the nodes 102-A and 102-B wish to cooperatively send symbol (s) to the node 102-D, the node 102-A may pre-multiply its transmission by the complex scalar: $\beta_A H_{BA} \alpha_B$ ($\beta_A H_{DA} \alpha_D$) * where the asterix denotes complex conjugation. Likewise, node 102-B may pre-multiply its transmission by the complex scalar: $\beta_B H_{AB} \alpha_A$ ($\beta_B H_{DB} \alpha_D$) *.

In some embodiments, if the nodes 102-A and 102-B wish to cooperatively send symbol (s) to the node 102-D, the node 102-A may pre-multiply its transmission by the complex scalar: $\beta_A H_{BA} \alpha_B$ ($\beta_A H_{DA} \alpha_D$) */ $N_1$ where the asterix denotes complex conjugation and $N_1$ is a real valued normalization factor. Likewise, node 102-B may pre-multiply its transmission by the complex scalar: $\beta_B H_{AB} \alpha_A$ ($\beta_B H_{DB} \alpha_D$) */ $N_2$ and $N_2$ is a real-valued normalization constant.

In some embodiments, the node 102-D may be arranged to acquire effective channel knowledge of the channels 106-AD and 106-BD and learn $\beta_D H_{AD} \alpha_A$ and $\beta_D H_{BD} \alpha_B$. It can be appreciated that such effective channel knowledge may be acquired with no extra overhead cost. In such embodiments, any two nodes would have all the information necessary to calibrate themselves and to perform distributed beamforming to a third node.

As shown in FIG. 1, the antennas 104-A, 104-B, and 104-D may be logically coupled to corresponding signal processing circuitry 108-A, 108-B, and 108-D. In various embodiments, the signal processing circuitry 108-A, 108-B, and 108-D may comprise or be implemented by one or more chips or integrated circuits (ICs). In some embodiments, the signal processing circuitry 108-A, 108-B, and 108-D may comprise or be implemented by wireless transceivers arranged to communicate at one or more frequencies in accordance with one or more wireless protocols.

In various embodiments, the signal processing circuitry 108-A, 108-B, and 108-D may be arranged to perform one or more operations to enable the nodes 102-A, 102-B, and 102-D to support distributed beamforming. As depicted, the signal processing circuitry 108-A, 108-B, and 108-D for the corresponding nodes 102-A, 102-B, and 102-D may be illustrated and described as comprising several separate functional components and/or modules. In various implementations, the components and/or modules may be connected and/or logically coupled by one or more communications media such as, for example, wired communication media, wireless communication media, or a combination of both, as desired for a given implementation. Although described in terms of components and/or modules to facilitate description, it is to be appreciated that such components and/or modules may be implemented by one or more hardware components, software components, and/or combination thereof.

The modules may be implemented, for example, by various logic devices and/or logic comprising instructions, data, and/or code to be executed by a logic device. Examples of a logic device include, without limitation, a central processing unit (CPU), microcontroller, microprocessor, general purpose processor, dedicated processor, chip multiprocessor (CMP), media processor, digital signal processor (DSP), network processor, co-processor, input/output (I/O) processor, application specific integrated circuit (ASIC), field programmable gate array (FPGA), programmable logic device (PLD), and so forth. In various implementations, one or more of the modules may include one or more processing cores arranged to execute digital logic and/or provide for multiple threads of execution. The modules also may comprise memory implemented by one or more types of computer-readable storage media such as volatile or non-volatile memory, removable or non-removable memory, erasable or non-erasable memory, writeable or re-writeable memory, and so forth.

As shown in the embodiment of FIG. 1, each of the nodes 102-A, 102-B, and 102-D may comprise corresponding signal processing modules arranged to perform various signal processing techniques to support distributed beamforming. In this embodiment, the node 102-A may comprise corresponding channel sounding module 110-A, channel measurement module 112-A and calibration module 114-A. The node 102-B may comprise corresponding channel sounding module 110-B, channel measurement module 112-B, and calibration module 114-B. The node 102-D may comprise corresponding channel sounding module 110-D, channel measurement module 112-D, and calibration module 114-D.

In various implementations, the channel sounding modules 110-A, 110-B, and 110-D may be arranged to enable the corresponding nodes 102-A, 102-B, and 102-D to transmit and/or receive one or more sounding frames. The channel measurement modules 112-A, 112-B, and 112-D may be arranged to enable the corresponding nodes 102-A, 102-B, and 102-D to obtain effective channel knowledge based on sounding frames. The calibration modules 114-A, 114-B, and 114-D may be arranged to enable the corresponding nodes 102-A, 102-B, and 102-D to pre-multiply transmissions by a scalar or weighting factor that is a function of the effective channel knowledge. In various embodiments, the calibration modules 114-A, 114-B, and 114-D may be arranged to calculate and apply scalars or weighting factors to one or more transmitted symbols.

Although the embodiment of FIG. 1 shows identical modules configured at each node for purposes of illustration, the embodiments are not limited in this context. For example, in some embodiments, one or more nodes (e.g., node 102-D) may not be configured with certain modules (e.g., channel measurement module 112-D, calibration module 114-D). Furthermore, while FIG. 1 may illustrate the signal processing circuitry 108-A, 108-B, and 108-D as comprising separate modules, each performing various operations, it can be appreciated that in some embodiments, the operations performed by various modules may be combined and/or separated for a given implementation and may be performed by a greater or fewer number of modules.

In various implementations, the signal processing circuitry 108-A, 108-B, and 108-D may be arranged to perform further operations to support wireless communication among nodes 102-A, 102-B, and 102-D. Such operations may include, for example, coding/ decoding operations such as forward error correcting (FEC) or convolutional coding/decoding, conversion operations such as upconverting, downconverting, time-to-frequency domain conversion, frequency-to-time domain conversion, analog-to-digital conversion (ADC), and/or digital-to-analog conversion (DAC), modulation/demodulation operations, mapping/demapping operations, error-correction operations, baseband processing operations, filtering operations, amplification operations, security operations (e.g., authentication, encryption/decryption), and so forth. In such implementations, the signal processing circuitry 108-A, 108-B, and 108-D may comprise suitable hardware and/or software to perform such operations. The embodiments are not limited in this context.

In various implementations, the described embodiments may provide systems and techniques for calibrating transmit and receive chains which requires a minimal exchange of information (e.g., sounding information) and very little damage overhead. In particular, it is not necessary to feed back any quantized channel measurements. The described embodiments thus may support beamforming without requiring the wireless devices to transmit quantized channel state information to each other in order for calibration to be performed. As such, the described embodiments may have low overhead suitable for implementation in a variety of applications such as sensor networks, sensor fusion, cooperative/distributed communication, distributed computation, distributed compression, distributed networking, and so forth.

Operations for various embodiments may be further described with reference to the following figures and accompanying examples. Some of the figures may include a logic flow. It can be appreciated that an illustrated logic flow merely provides one example of how the described functionality may be implemented. Further, a given logic flow does not necessarily have to be executed in the order presented unless otherwise indicated. In addition, a logic flow may be implemented by a hardware element, a software element executed by a processor, or any combination thereof. The embodiments are not limited in this context.

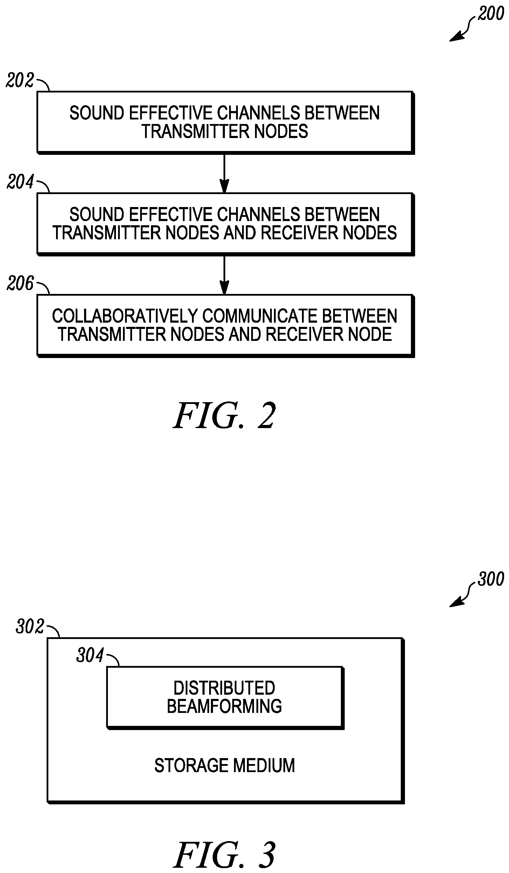

**FIG. 2** illustrates one embodiment of a logic flow 200 for distributed beamforming. In various embodiments, the logic flow 200 may be performed by various systems, nodes, and/or modules and may be implemented as hardware, software, and/or any combination thereof, as desired for a given set of design parameters or performance constraints. For example, the logic flow 200 may be implemented by a logic device (e.g., transmitter node, receiver node) and/or logic (e.g., distributed beamforming logic) comprising instructions, data, and/or code to be executed by a logic device. For purposes of illustration, and not limitation, the logic flow 200 is described with reference to FIG. 1. The embodiments are not limited in this context.

The logic flow 200 may comprise sounding effective channels between transmitter nodes (block 202). In various embodiments, nodes 102-A and 102-B may sound each others effective channel during a first phase. In this example, the channel 106-AB from the antenna 104-A of node 102-A to the antenna 104-B of node 102-B may be denoted as $H_{AB}$. The channel 106-BA from the antenna 104-B of node 102-B to the antenna 104-A of node 102-A may be denoted as $H_{BA}$. As a result, node 102-A learns or acquires the effective channel $\beta_A H_{BA} \alpha_B$ from the node 102-B to the node 102-A, and the node 102-B learns or acquires the effective channel $\beta_B H_{AB} \alpha_A$ from the node 102-A to the node 102-B. In general, $\beta_B H_{BA} \alpha_A \neq \beta_A H_{BA} \alpha_B$. In various implementations, acquisition of the effective channel knowledge for the channels 106-AB ($H_{AB}$) and 106-BA ($H_{BA}$) may require two sounding frames.

The logic flow 200 may comprise sounding effective channels between transmitter nodes and a receiver node (block 204). In various embodiments, the node 102-D may send a sounding packet simultaneously to the node 102-A and the node 102-B during a second phase. As a result, the transmitter nodes 102-A and 102-B learn or acquire the additional effective channels $\beta_A H_{DA} \alpha_D$ from node 102-D to node 102-A, and $\beta_B H_{DB} \alpha_D$ from node 102-D to node 102-B. In various implementations, acquisition of the effective channel knowledge during this phase requires one transmission for a total overhead of three sounding frames during the first and second phases.

The logic flow 200 may comprise cooperatively communicating between transmitter nodes and a receiver node (block 206). In various embodiments, nodes 102-A and node 102-B may collaboratively communicate to node 102-D during a third phase. This may be accomplished by pre-multiplying transmissions from the nodes 102-A and 102-B by scalars that are a function of the effective channel knowledge gained in the first and second phases.

In particular, if the nodes 102-A and 102-B wish to cooperatively send a symbol ($s$) to the node 102-D, the node 102-A may pre-multiply its transmission by the complex scalar: $\beta_A H_{BA} \alpha_B (\beta_A H_{DA} \alpha_B)^* / |\beta_A H_{BA} \alpha_B \beta_A H_{DA} \alpha_D|$, where the asterix denotes complex conjugation. Likewise, the node 102-B may pre-multiply its transmission by the complex scalar: $\beta_B H_{AB} \alpha_A (\beta_B H_{DB} \alpha_D)^* / |\beta_B H_{AB} \alpha_A \beta_B H_{DB} \alpha_D|$.

It follows that the transmission to the node 102-D from the node 102-A is: $\beta_A H_{BA} \alpha_B (\beta_A H_{DA} \alpha_D)^* s / |\beta_A H_{BA} \alpha_B \beta_A H_{DA} \alpha_D|$, and the transmission to node 102-D from the node 102-B is: $\beta_B H_{AB} \alpha_A (\beta_B H_{DB} \alpha_D)^* s / |\beta_B H_{AB} \alpha_A \beta_B H_{DB} \alpha_D|$.

The received signal at the node 102-D is then found to be:

$$\left( \frac{\alpha_A \alpha_B \alpha_D^* \beta_D H_{AB} |H_{DA}|}{|\alpha_B \alpha_D^* H_{AB}|} + \frac{\alpha_A \alpha_B \alpha_D^* \beta_D H_{AB} |H_{DB}|}{|\alpha_A \alpha_D^* H_{AB}|} \right) s ,$$

where by channel reciprocity, both terms in the parentheses have the same phase and therefore add coherently to provide a beamforming gain at node 102-D.

In some embodiments, if the nodes 102-A and 102-B wish to cooperatively send symbol (s) to the node 102-D, the node 102-A may pre-multiply its transmission by the complex scalar: $\beta_A H_{BA} \alpha_B$ $(\beta_A H_{DA} \alpha_D)$ * where the asterix denotes complex conjugation. Likewise, node 102-B may pre-multiply its transmission by the complex scalar: $\beta_B H_{AB} \alpha_A$ $(\beta_B H_{DB} \alpha_D)$ *.

In some embodiments, if the nodes 102-A and 102-B wish to cooperatively send symbol (s) to the node 102-D, the node 102-A may pre-multiply its transmission by the complex scalar: $\beta_A H_{BA} \alpha_B$ $(\beta_A H_{DA} \alpha_D)$ * / $N_1$ where the asterix denotes complex conjugation and $N_1$ is a real valued normalization factor. Likewise, node 102-B may pre-multiply its transmission by the complex scalar: $\beta_B H_{AB} \alpha_A$ $(\beta_B H_{DB} \alpha_D)$ * / $N_2$ and $N_2$ is a real-valued normalization constant.

**FIG. 3** illustrates one embodiment of an article of manufacture 300. As shown, the article 300 may comprise a storage medium 302 to store distributed beamforming logic 304 for performing various operations in accordance with the described embodiments. In various embodiments, the article 300 may be implemented by various systems, nodes, and/or modules.

The article 300 and/or machine-readable storage medium 302 may include one or more types of computer-readable storage media capable of storing data, including volatile memory or, non-volatile memory, removable or non-removable memory, erasable or non-erasable memory, writeable or re-writeable memory, and so forth. Examples of a machine-readable storage medium may include, without limitation, random-access memory (RAM), dynamic RAM (DRAM), Double-Data-Rate DRAM (DDRAM), synchronous DRAM (SDRAM), static RAM (SRAM), read-only memory (ROM), programmable ROM (PROM), erasable programmable ROM (EPROM), electrically erasable programmable ROM (EEPROM), Compact Disk ROM (CD-ROM), Compact Disk Recordable (CD-R), Compact Disk Rewriteable (CD-RW), flash memory (e.g., NOR or NAND flash memory), content addressable memory (CAM), polymer memory (e.g., ferroelectric polymer memory), phase-change memory (e.g., ovonic memory), ferroelectric memory, silicon-oxide-nitride-oxide-silicon (SONOS) memory, disk (e.g., floppy disk, hard drive, optical disk, magnetic disk, magneto-optical disk), or card (e.g., magnetic card, optical card), tape, cassette, or any other type of computer-readable storage media suitable for storing information. Moreover, any media involved with downloading or transferring a computer program from a remote computer to a requesting computer carried by data signals embodied in a carrier wave or other propagation medium through a communication link (e.g., a modem, radio or network connection) is considered computer-readable storage media.

The article 300 and/or machine-readable storage medium 302 may store distributed beamforming logic 304 comprising instructions, data, and/or code that, if executed by a machine, may cause the machine to perform a method and/or operations in accordance with the described embodiments. Such a machine may include, for example, any suitable processing platform, computing platform, computing device, processing device, computing system, processing system, computer, processor, or the like, and may be implemented using any suitable combination of hardware and/or software.

The distributed beamforming logic 304 may comprise, or be implemented as, software, a software module, an application, a program, a subroutine, instructions, an instruction set, computing code, words, values, symbols or combination thereof. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, such as C, C++, Java, BASIC, Perl, Matlab, Pascal, Visual BASIC, assembly language, machine code, and so forth.

Numerous specific details have been set forth herein to provide a thorough understanding of the embodiments. It will be understood by those skilled in the art, however, that the embodiments may be practiced without these specific details. In other instances, well-known operations, components and circuits have not been described in detail so as not to obscure the embodiments. It can be appreciated that the specific structural and functional details disclosed herein may be representative and do not necessarily limit the scope of the embodiments.

Unless specifically stated otherwise, it may be appreciated that terms such as "processing," "computing," "calculating," "determining," or the like, refer to the action and/or processes of a computer or computing system, or similar electronic computing device, that manipulates and/or transforms data represented as physical quantities (e.g., electronic) within computing system registers and/or memories into other data similarly represented as physical quantities within the computing system memories, registers or other such information storage, transmission or display devices.

It is also worthy to note that any reference to "one embodiment" or "an embodiment" means that a particular feature, structure, or characteristic described in connection with the embodiment is included in at least one embodiment. Thus, appearances of the phrases "in one embodiment" or "in an embodiment" in various places throughout the specification are not necessarily all referring to the same embodiment. Furthermore, the particular features, structures or characteristics may be combined in any suitable manner in one or more embodiments.

Some embodiments may be described using the expression "coupled" and "connected" along with their derivatives. It should be understood that these terms are not intended as synonyms for each other. For example, some embodiments may be described using the term "connected" to indicate that two or more elements are in direct physical or electrical contact with each other. In another example, some embodiments may be described using the term "coupled" to indicate that two or more elements are in direct physical or electrical contact. The term "coupled," however, may also mean that two or more elements are not in direct contact with each other, but yet still co-operate or interact with each other.

While certain features of the embodiments have been illustrated as described herein, many modifications, substitutions, changes and equivalents will now occur to those skilled in the art. It is therefore to be understood that the appended claims are intended to cover all such modifications and changes.

**Claims**

1. An apparatus comprising:

    a first transmitter node (102-A) arranged to cooperate with a second transmitter node (102-B) for distributed beamforming and cooperatively communicating with a receiver node (102-D) wherein the first transmitter node is configured to acquire effective channel knowledge of: channels (106-AB, 106-BA) between the first and second transmitter nodes ((102-A, 102-B); a channel (106-DA) between the receiver node (102-D) and the first transmitter node (102-A); and a channel (106-DB) between the receiver node (102-D) and the second transmitter node (102-B) using three sounding frames and calibrate transmit and receive chains of the first and second transmitter nodes based on the effective channel knowledge wherein the first transmitter node (102-A), second transmitter node (102-B) and receiver node (102-D) comprise independent wireless devices.

2. The apparatus of claim 1, the first transmitter node (102-A) to send a sounding frame to the second transmitter node (102-B); or

    the first transmitter node (102-A) to receive a sounding frame from the second transmitter node (102-B); or
    wherein at least one of the first transmitter node (102-A) and the second transmitter node (102-B) is arranged to receive a sounding frame from the receiver node (102-D); or
    the first and second transmitter nodes (102-A, 102-B) to pre-multiply transmissions to the receiver node (102-D) by a scalar based on the acquired effective channel knowledge; or
    the receiver node (102-D) to realize one or more of beamforming gain and an improved signal-to-noise ratio;
    the receiver node (102-D) to acquire effective channel knowledge of channels from the first and second transmitter nodes.

3. The apparatus of claim 1, wherein:

    the effective channel knowledge for the channel $H_{AB}$ between the first transmitter node (102-A) and the second transmitter node (102-B) comprises $\beta_B H_{AB} \alpha_A$, where $\alpha_A$ models the transmit chain of the first transmitter node and $\beta_B$ models the receive chain of the second transmitter node; and
    the effective channel knowledge for the channel $H_{BA}$ between the second transmitter node (102-D) and the first transmitter node (102-A) comprises $\beta_A H_{BA} \alpha_B$, where $\alpha_B$ models the transmit chain of the second transmitter node and $\beta_A$ models the receive chain of the first transmitter node.

4. The apparatus of claim 3, wherein:

    the effective channel knowledge for the channel $H_{DA}$ between the receiver node (102-D) and the first transmitter node (102-A) comprises $\beta_A H_{DA} \alpha_D$, and the effective channel knowledge for the channel $H_{DB}$ between the receiver node (102-D) and the second transmitter node (102-B) comprises $\beta_B H_{DB} \alpha_D$, where $\alpha_D$ models the transmit chain of the receiver node (102-D).

5. The apparatus of claim 4 the first transmitter node (102-A) to pre-multiply a transmission by a complex scalar $\beta_A H_{BA} \alpha_B (\beta_A H_{DA} \alpha_D)^*$, and the second transmitter node (102-B) to pre-multiply the transmission by a complex scalar

$\beta_B H_{AB} \alpha_A (\beta_B H_{DB} \alpha_D)^*$, where the (*) denotes complex conjugation; or
the first transmitter node (102-A) to pre-multiply a transmission by a complex scalar $\beta_A H_{BA} \alpha_B (\beta_A H_{DA} \alpha_D)^*/N_1$, and
the second transmitter node (102-B) to pre-multiply the transmission by a complex scalar $\beta_B H_{AB} \alpha_A (\beta_B H_{DB} \alpha_D)^*/N_2$,
where the (*) denotes complex conjugation, $N_1$ comprises a real valued normalization factor, and $N_2$ comprises a real-valued normalization constant; or
wherein a transmitted symbol (s) received at the receiver node comprises:

$$\left( \frac{\alpha_A \alpha_B \alpha_D^* \beta_D H_{AB} |H_{DA}|}{|\alpha_B \alpha_D^* H_{AB}|} + \frac{\alpha_A \alpha_B \alpha_D^* \beta_D H_{AB} |H_{DB}|}{|\alpha_A \alpha_D^* H_{AB}|} \right) s .$$

6. A system (100) comprising:

   an apparatus as claimed in any preceding claim and
   a source node coupled to the first transmitter node (102-A) through a communication medium to deliver a packet for delivery to the receiver node (102-D), wherein the first transmitter node, second transmitter node, receiver node and source node comprise independent wireless devices.

7. The system of claim 6, wherein the receiver node (102-D) is not in range of the source node, optionally, wherein the range of the source node is increased by phase adjustments based on channel knowledge.

8. A method comprising:

   sounding (202) effective channels between transmitter nodes (102-A, 102-B) using a first sounding frame to acquire effective channel knowledge of channels (106-AB, 106-BA) between the transmitter nodes;
   sounding (204) effective channels between each of the transmitter nodes and a receiver node (102-D) using second and third sounding frames to acquire effective channel knowledge of channels (106-DA, 102-DB) between each of the transmitter nodes and the receiver node;
   for distributed beamforming and collaboratively communicating (206) between the transmitter nodes and the receiver node, wherein the transmitter nodes and receiver node comprise independent wireless devices.

9. The method of claim 8, further comprising calibrating transmit and receive chains of the transmitter nodes (102-A, 102-B) based on the acquired effective channel knowledge; or
   further comprising pre-multiplying transmissions from the transmitter nodes to the receiver node (102-D) by a scalar based on the acquired effective channel knowledge.

10. The method of claim 8, further comprising:

    acquiring channel knowledge for the channel $H_{AB}$ between the first transmitter node (102-A) and the second transmitter node (102-B) comprises $\beta_B H_{AB} \alpha_A$, where $\alpha_A$ models the transmit chain of the first transmitter node and $\beta_B$ models the receive chain of the second transmitter node; and
    acquiring effective channel knowledge for the channel $H_{BA}$ between the second transmitter node and the first transmitter node comprises $\beta_A H_{BA} \alpha_B$, where $\alpha_B$ models the transmit chain of the second transmitter node and $\beta_A$ models the receive chain of the first transmitter node.

11. The method of claim 10, further comprising:

    acquiring effective channel knowledge for the channel $H_{DA}$ between the receiver node (102-D) and the first transmitter node (102-A) comprises $\beta_A H_{DA} \alpha_D$, and the effective channel knowledge for the channel $H_{DB}$ between the receiver node (102-D) and the second transmitter node (102-A) comprises $\beta_B H_{DB} \alpha_D$, where $\alpha_D$ models the transmit chain of the receiver node.

12. The method of claim 11, further comprising:

    transmitting a symbol (s) from the first transmitter node (102-A) comprising:

    $\beta_A H_{BA} \alpha_B (\beta_A H_{DA} \alpha_D)^* s/|\beta_A H_{BA} \alpha_B \beta_A H_{DA} \alpha_D|$ and
    transmitting the symbol (s) from the second transmitter node (102-B) comprising:

$\beta_B H_{AB} \alpha_A \ (\beta_B H_{DB} \alpha_D)^* s / |\beta_B H_{AB} \alpha_A \beta_B H_{DB} \alpha_D|$; optionally,

further comprising receiving the symbol (s) at the receiver node (102-D) comprising:

$$\left( \frac{\alpha_A \alpha_B \alpha_D^* \beta_D H_{AB} |H_{DA}|}{|\alpha_B \alpha_D^* H_{AB}|} + \frac{\alpha_A \alpha_B \alpha_D^* \beta_D H_{AB} |H_{DB}|}{|\alpha_A \alpha_D^* H_{AB}|} \right) s$$

13. Machine readable storage (302) comprising code instructions (304) arranged, when executed on a processor, to implement all the steps of a method as claimed in any of claims 8-12.

**Patentansprüche**

1. Vorrichtung, die Folgendes umfasst:

   einen ersten Senderknoten (102-A), der angeordnet ist zum Zusammenwirken mit einem zweiten Senderknoten (102-B) für verteilte Strahlformung und zum zusammenwirkenden Kommunizieren mit einem Empfängerknoten (102-D), wobei der erste Senderknoten ausgelegt ist zum Erfassen von Wissen über effektive Kanäle von: Kanälen (106-AB, 106-BA) zwischen dem ersten und dem zweiten Senderknoten (102-A, 102-B); einem Kanal (106-DA) zwischen dem Empfängerknoten (102-D) und dem ersten Senderknoten (102-A) und einem Kanal (106-DB) zwischen dem Empfängerknoten (102-D) und dem zweiten Senderknoten (102-B) unter Verwendung von drei Sondierungsrahmen und zum Kalibrieren von Sende- und Empfangsketten des ersten und des zweiten Senderknotens auf der Grundlage des Wissens über effektive Kanäle, wobei der erste Senderknoten (102-A), der zweite Senderknoten (102-B) und der Empfängerknoten (102-D) unabhängige drahtlose Geräte umfassen.

2. Vorrichtung nach Anspruch 1, wobei der erste Senderknoten (102-A) einen Sondierungsrahmen an den zweiten Senderknoten (102-B) senden soll; oder
   der erste Senderknoten (102-A) einen Sondierungsrahmen vom zweiten Senderknoten (102-B) empfangen soll; oder wobei der erste Senderknoten (102-A) und/oder der zweite Senderknoten (102-B) angeordnet ist zum Empfangen eines Sondierungsrahmens vom Empfängerknoten (102-D); oder
   der erste und der zweite Senderknoten (102-A, 102-B) Sendungen an den Empfängerknoten (102-D) auf der Grundlage des erfassten Wissens über effektive Kanäle mit einem Skalar vormultiplizieren soll; oder
   der Empfängerknoten (102-D) Strahlformungsgewinn und/oder ein verbessertes Signal-Rausch-Verhältnis realisieren soll;
   der Empfängerknoten (102-D) Wissen über effektive Kanäle von Kanälen vom ersten und vom zweiten Senderknoten erfassen soll.

3. Vorrichtung nach Anspruch 1, wobei:

   das Wissen über effektive Kanäle für den Kanal $H_{AB}$ zwischen dem ersten Senderknoten (102-A) und dem zweiten Senderknoten (102-B) $\beta_B H_{AB} \alpha_A$ umfasst, wobei $\alpha_A$ die Sendekette des ersten Senderknotens modelliert und $\beta_B$ die Empfangskette des zweiten Senderknotens modelliert; und
   das Wissen über effektive Kanäle für den Kanal $H_{BA}$ zwischen dem zweiten Senderknoten (102-D) und dem ersten Senderknoten (102-A) $\beta_A H_{BA} \alpha_B$ umfasst, wobei $\alpha_B$ die Sendekette des zweiten Senderknotens modelliert und $\beta_A$ die Empfangskette des ersten Senderknotens modelliert.

4. Vorrichtung nach Anspruch 3, wobei:

   das Wissen über effektive Kanäle für den Kanal $H_{DA}$ zwischen dem Empfängerknoten (102-D) und dem ersten Senderknoten (102-A) $\beta_A H_{DA} \alpha_D$ umfasst und das Wissen über effektive Kanäle für den Kanal $H_{DB}$ zwischen dem Empfängerknoten (102-D) und dem zweiten Senderknoten (102-B) $\beta_B H_{DB} \alpha_D$ umfasst, wobei $\alpha_D$ die Sendekette des Empfängerknotens (102-D) modelliert.

5. Vorrichtung nach Anspruch 4, wobei der erste Senderknoten (102-A) eine Sendung mit einem komplexen Skalar $\beta_A H_{BA} \alpha_B \ (\beta_A H_{DA} \alpha_D)^*$ vormultiplizieren soll, und der zweite Senderknoten (102-B) die Sendung mit einem komplexen Skalar $\beta_B H_{AB} \alpha_A \ (\beta_B H_{DB} \alpha_D)^*$ vormultiplizieren soll, wobei der (*) komplexe Konjugation bezeichnet; oder
   der erste Senderknoten (102-A) eine Sendung mit einem komplexen Skalar $\beta_A H_{BA} \alpha_B \ (\beta_A H_{DA} \alpha_D)^* / N_1$ vormultipli-

zieren soll, und der zweite Senderknoten (102-B) die Sendung mit einem komplexen Skalar $\beta_B H_{AB}\alpha_A$ ($\beta_B H_{DB}\alpha_D$) $^*/N_2$ vormultiplizieren soll, wobei der (*) komplexe Konjugation bezeichnet, $N_1$ einen realwertigen Normierungsfaktor umfasst und $N_2$ eine realwertige Normierungskonstante umfasst; oder
wobei ein gesendetes Symbol (s), das am Empfängerknoten empfangen wird, Folgendes umfasst:

$$\left( \frac{\alpha_A \alpha_B \alpha_D^* \beta_D H_{AB} |H_{DA}|}{|\alpha_B \alpha_D^* H_{AB}|} + \frac{\alpha_A \alpha_B \alpha_D^* \beta_D H_{AB} |H_{DB}|}{|\alpha_A \alpha_D^* H_{AB}|} \right) s.$$

**6.** System (100), das Folgendes umfasst:

eine Vorrichtung nach einem der vorhergehenden Ansprüche und
einen Quellenknoten, der mit dem ersten Senderknoten (102-A) über ein Kommunikationsmedium gekoppelt ist, um ein Paket zur Lieferung an den Empfängerknoten (102-D) abzuliefern, wobei der erste Senderknoten, der zweite Senderknoten, der Empfängerknoten und der Quellenknoten unabhängige drahtlose Geräte umfassen.

**7.** System nach Anspruch 6, wobei sich der Empfängerknoten (102-D) nicht in Reichweite des Quellenknotens befindet, optional,
wobei die Reichweite des Quellenknotens durch Phasenanpassungen auf der Grundlage des Wissens über Kanäle erhöht wird.

**8.** Verfahren, das die folgenden Schritte umfasst:

Sondieren (202) effektiver Kanäle zwischen Senderknoten (102-A, 102-B) unter Verwendung eines ersten Sondierungsrahmens, um Wissen über effektive Kanäle von Kanälen (106-AB, 106-BA) zwischen den Senderknoten zu erfassen;
Sondieren (204) effektiver Kanäle zwischen jedem der Senderknoten und einem Empfängerknoten (102-D) unter Verwendung eines zweiten und eines dritten Sondierungsrahmens, um Wissen über effektive Kanäle von Kanälen (106-DA, 102-DB) zwischen jedem der Senderknoten und dem Empfängerknoten zu erfassen;
für verteiltes Strahlformen und zusammenwirkendes Kommunizieren (206) zwischen den Senderknoten und dem Empfängerknoten, wobei die Senderknoten und der Empfängerknoten unabhängige drahtlose Geräte umfassen.

**9.** Verfahren nach Anspruch 8, das ferner Kalibrieren von Sende- und Empfangsketten der Senderknoten (102-A, 102-B) auf der Grundlage des erfassten Wissens über effektive Kanäle umfasst; oder
ferner Vormultiplizieren von Sendungen von den Senderknoten an den Empfängerknoten (102-D) auf der Grundlage des erfassten Wissens über effektive Kanäle mit einem Skalar umfasst.

**10.** Verfahren nach Anspruch 8, das ferner die folgenden Schritte umfasst:

Erfassen des Wissens über Kanäle für den Kanal $H_{AB}$ zwischen dem ersten Senderknoten (102-A) und dem zweiten Senderknoten (102-B) umfasst $\beta_B H_{AB}\alpha_A$, wobei $\alpha_A$ die Sendekette des ersten Senderknotens modelliert und $\beta_B$ die Empfangskette des zweiten Senderknotens modelliert; und
Erfassen des Wissens über effektive Kanäle für den Kanal $H_{BA}$ zwischen dem zweiten Senderknoten und dem ersten Senderknoten umfasst $\beta_A H_{BA}\alpha_B$, wobei $\alpha_B$ die Sendekette des zweiten Senderknotens modelliert und $\beta_A$ die Empfangskette des ersten Senderknotens modelliert.

**11.** Verfahren nach Anspruch 10, das ferner den folgenden Schritt umfasst:

Erfassen des Wissens über effektive Kanäle für den Kanal $H_{DA}$ zwischen dem Empfängerknoten (102-D) und dem ersten Senderknoten (102-A) umfasst $\beta_A H_{DA}\alpha_D$ und des Wissens über effektive Kanäle für den Kanal $H_{DB}$ zwischen dem Empfängerknoten (102-D) und dem zweiten Senderknoten (102-A) umfasst $\beta_B H_{DB}\alpha_D$, wobei $\alpha_D$ die Sendekette des Empfängerknotens modelliert.

**12.** Verfahren nach Anspruch 11, das ferner die folgenden Schritte umfasst:

Senden eines Symbols (s) vom ersten Senderknoten (102-A) umfasst:

$\beta_A H_{BA}\alpha_B$ ($\beta_A H_{DA}\alpha_D$) *s/ $|\beta_A H_{BA}\alpha_B\beta_A H_{DA}\alpha_D|$ und

Senden des Symbols (s) vom zweiten Senderknoten (102-B) umfasst:

$\beta_B H_{AB}\alpha_A$ ($\beta_B H_{DB}\alpha_D$) *s/ $|\beta_B H_{AB}\alpha_A\beta_B H_{DB}\alpha_D|$, optional,

ferner umfassend Empfangen des Symbols (s) am Empfängerknoten (102-D) umfasst:

$$\left( \frac{\alpha_A\alpha_B\alpha_D^*\beta_D H_{AB}|H_{DA}|}{|\alpha_B\alpha_D^* H_{AB}|} + \frac{\alpha_A\alpha_B\alpha_D^*\beta_D H_{AB}|H_{DB}|}{|\alpha_A\alpha_D^* H_{AB}|} \right) s.$$

13. Maschinenlesbare Speicherungsvorrichtung (302), die Codeanweisungen (304) umfasst, die angelegt sind, alle Schritte eines Verfahrens nach einem der Ansprüche 8-12 zu implementieren, wenn sie auf einem Prozessor ausgeführt werden.

**Revendications**

1. Appareil comprenant :

un premier noeud émetteur (102-A) conçu pour coopérer avec un deuxième noeud émetteur (102-B) pour réaliser une conformation de faisceau distribuée et une communication coopérative avec un noeud récepteur (102-D), dans lequel le premier noeud émetteur est configuré pour acquérir une connaissance des canaux effectifs concernant : des canaux (106-AB, 106-BA) entre les premier et deuxième noeuds émetteurs ((102-A, 102-B) ; un canal (106-DA) entre le noeud récepteur (102-D) et le premier noeud émetteur (102-A) ; et un canal (106-DB) entre le noeud récepteur (102-D) et le deuxième noeud émetteur (102-B) à l'aide de trois trames de sondage et étalonner les chaînes d'émission et de réception des premier et deuxième noeuds émetteurs sur la base de la connaissance des canaux effectifs, le premier noeud émetteur (102-A), le deuxième noeud émetteur (102-B) et le noeud récepteur (102-D) comprenant des dispositifs sans fil indépendants.

2. Appareil selon la revendication 1, le premier noeud émetteur (102-A) pour envoyer une trame de sondage au deuxième noeud émetteur (102-B) ; ou

le premier noeud émetteur (102-A) pour recevoir une trame de sondage en provenance du deuxième noeud émetteur (102-B) ; ou

au moins l'un du premier noeud émetteur (102-A) et du deuxième noeud émetteur (102-B) étant conçu pour recevoir une trame de sondage en provenance du noeud récepteur (102-D) ; ou

les premier et deuxième noeuds émetteurs (102-A, 102-B) pour pré-multiplier des transmissions au noeud récepteur (102-D) par un scalaire sur la base de la connaissance des canaux effectifs acquise ; ou

le noeud récepteur (102-D) pour réaliser un ou plusieurs gains de formation de faisceau et un rapport signal-sur-bruit amélioré ;

le noeud récepteur (102-D) pour acquérir une connaissance de canaux effectifs acquise concernant des canaux en provenance des premiers et deuxièmes noeuds émetteurs.

3. Appareil selon la revendication 1, dans lequel :

la connaissance du canal effectif pour le canal $H_{AB}$ entre le premier noeud émetteur (102-A) et le deuxième noeud émetteur (102-B) comprend $\beta_B H_{AB}\alpha_A$, où $\alpha_A$ modélise la chaîne d'émission du premier noeud émetteur et $\beta_B$ modélise la chaîne de réception du deuxième noeud émetteur ; et

la connaissance du canal effectif pour le canal $H_{BA}$ entre le deuxième noeud émetteur (102-D) et le premier noeud émetteur (102-A) comprend $\beta_A H_{BA}\alpha_B$, où $\alpha_B$ modélise la chaîne d'émission du deuxième noeud émetteur et $\beta_A$ modélise la chaîne de réception du premier noeud émetteur.

4. Appareil selon la revendication 3, dans lequel :

la connaissance du canal effectif pour le canal $H_{DA}$ entre le noeud récepteur (102-D) et le premier noeud émetteur (102-A) comprend $\beta_A H_{DA}\alpha_D$, et la connaissance du canal effectif pour le canal $H_{DB}$ entre le noeud récepteur (102-D) et le deuxième noeud émetteur (102-B) comprend $\beta_B H_{DB}\alpha_D$, où $\alpha_D$ modélise la chaîne d'émission du noeud récepteur (102-D).

**5.** Appareil selon la revendication 4,

le premier noeud émetteur (102-A) pour pré-multiplier une transmission par un scalaire complexe $\beta_A H_{BA} \alpha_B$ $(\beta_A - H_{DA}\alpha_D)^*$, et le deuxième noeuds émetteur (102-B) pour pré-multiplier la transmission par un scalaire complexe $\beta_B H_{AB}\alpha_A$ $(\beta_B H_{DB}\alpha_D)^*$, où (*) désigne une conjugaison complexe ; ou

le premier noeud émetteur (102-A) pour pré-multiplier une transmission par un scalaire complexe $\beta_A H_{BA}\alpha_B$ $(\beta_A - H_{DA}\alpha_D)^*/N_1$, et le deuxième noeud émetteur (102-B) pour pré-multiplier la transmission par un scalaire complexe $\beta_B H_{AB}\alpha_A$ $(\beta_B H_{DB}\alpha_D)^*/N_2$, où (*) désigne une conjugaison complexe, $N_1$ comprend un facteur de normalisation en valeur réelle, et $N_2$ comprend une constante de normalisation en valeur réelle ; ou

dans lequel un symbole (s) transmis, reçu au niveau du noeud récepteur, comprend :

$$\left( \frac{\alpha_A \alpha_B \alpha_D^* \beta_D H_{AB} |H_{DA}|}{|\alpha_B \alpha_D^* H_{AB}|} + \frac{\alpha_A \alpha_B \alpha_D^* \beta_D H_{AB} |H_{DB}|}{|\alpha_A \alpha_D^* H_{AB}|} \right) s$$

**6.** Système (100) comprenant :

un appareil tel que décrit dans l'une quelconque des revendications précédentes, et
un noeud source couplé au premier noeud émetteur (102-A) via un support de communication pour délivrer un paquet à délivrer au noeud récepteur (102-D), le premier noeud émetteur, le deuxième noeud émetteur, le noeud récepteur et le noeud source étant des dispositifs sans fil indépendants.

**7.** Système selon la revendication 6, dans lequel le noeud récepteur (102-D) n'est pas à la portée du noeud source, optionnellement,
la portée du noeud source étant augmentée par des ajustements de phase sur la base de la connaissance des canaux.

**8.** Procédé comprenant :

le sondage (202) de canaux effectifs entre les noeuds émetteurs (102-A, 102-B) à l'aide d'une première trame de sondage pour acquérir une connaissance des canaux effectifs concernant les canaux (106-AB, 106-BA) entre les noeuds émetteurs ;
le sondage (204) de canaux effectifs entre chacun des noeuds émetteurs et un noeud récepteur (102-D) à l'aide de deuxième et troisième trames de sondage pour acquérir une connaissance des canaux effectifs concernant les canaux (106-DA, 102-DB) entre chacun des noeuds émetteurs et le noeud récepteur ;
pour réaliser une conformation de faisceau distribuée et une communication collaborative (206) entre les noeuds émetteurs et le noeud récepteur, les noeuds émetteurs et le noeud récepteur comprenant des dispositifs sans fil indépendants.

**9.** Procédé selon la revendication 8, comprenant en outre l'étalonnage des chaînes d'émission et de réception des noeuds émetteurs (102-A, 102-B) sur la base de la connaissance des canaux effectifs acquise ; ou
comprenant en outre une pré-multiplication de transmissions par les noeuds émetteurs au noeud récepteur (102-D) par un scalaire sur la base de la connaissance des canaux effectifs acquise.

**10.** Procédé selon la revendication 8, comprenant en outre le fait que :

l'acquisition d'une connaissance du canal pour le canal $H_{AB}$ entre le premier noeud émetteur (102-A) et le deuxième noeud émetteur (102-B) comprend $\beta_B H_{AB}\alpha_A$, où $\alpha_A$ modélise la chaîne d'émission du premier noeud émetteur et $\beta_B$ modélise la chaîne de réception du deuxième noeud émetteur ; et
l'acquisition d'une connaissance du canal effectif pour le canal $H_{BA}$ entre le deuxième noeud émetteur et le premier noeud émetteur comprend $\beta_A H_{BA}\alpha_B$, où $\alpha_B$ modélise la chaîne d'émission du deuxième noeud émetteur et $\beta_A$ modélise la chaîne de réception du premier noeud émetteur.

**11.** Procédé selon la revendication 10, comprenant en outre le fait que :

l'acquisition d'une connaissance du canal effectif pour le canal $H_{DA}$ entre le noeud récepteur (102-D) et le premier noeud émetteur (102-A) comprend $\beta_A H_{DA}\alpha_D$, et la connaissance du canal effectif pour le canal $H_{DB}$ entre le noeud récepteur (102-D) et le deuxième noeud émetteur (102-A) comprend $\beta_B H_{DB}\alpha_D$, où $\alpha_D$ modélise la chaîne d'émission du noeud récepteur.

**12.** Procédé selon la revendication 11, comprenant en outre le fait que :

l'émission d'un symbole (s) par le premier noeud émetteur (102-A) comprend :

$\beta_A H_{BA} \alpha_B (\beta_A H_{DA} \alpha_D)$ * s / $|\beta_A H_{BA} \alpha_B \beta_A H_{DA} \alpha_D)|$, et
l'émission d'un symbole (s) par le deuxième noeud émetteur (102-B) comprend :

$\beta_B H_{AB} \alpha_A (\beta_B H_{DB} \alpha_D)$ * s / $|\beta_B H_{AB} \alpha_A \beta_B H_{DB} \alpha_D)|$ ; optionnellement,

comprenant en outre le fait que la réception du symbole (s) au niveau du noeud récepteur (102-D) comprend :

$$\left( \frac{\alpha_A \alpha_B \alpha_D^* \beta_D H_{AB} |H_{DA}|}{|\alpha_B \alpha_D^* H_{AB}|} + \frac{\alpha_A \alpha_B \alpha_D^* \beta_D H_{AB} |H_{DB}|}{|\alpha_A \alpha_D^* H_{AB}|} \right) s$$

**13.** Stockage lisible par une machine (302) comprenant des instructions de code (304) conçues, lorsqu'elles sont exécutées sur un processeur, pour mettre en oeuvre toutes les étapes d'un procédé selon l'une quelconque des revendications 8-12.

**FIG. 1**

EP 2 041 885 B1

200

202 — SOUND EFFECTIVE CHANNELS BETWEEN TRANSMITTER NODES

204 — SOUND EFFECTIVE CHANNELS BETWEEN TRANSMITTER NODES AND RECEIVER NODES

206 — COLLABORATIVELY COMMUNICATE BETWEEN TRANSMITTER NODES AND RECEIVER NODE

*FIG. 2*

300

302 —

304 — DISTRIBUTED BEAMFORMING

STORAGE MEDIUM

*FIG. 3*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2005101772 A

### Non-patent literature cited in the description

- **RAGHURAMAN MUDUMBAI et al.** Distributed Beamforming using 1 Bit Feedback: from Concept to Realization. *PROCEEDINGS OF THE ANNUAL ALLERTON CONFERENCE ON COMMUNICATION, CONTROL AND COMPUTING,* 01 January 2006, vol. XX (44), 1020-1027

- Collaborative Beamforming for Distributed Wireless Ad Hoc Sensor Networks. **MITRAN P et al.** IEEE TRANSACTIONS ON SIGNAL PROCESSING. IEEE SERVICE CENTER, 01 November 2005, vol. 53, 4110-4124